# EUROPEAN PATENT APPLICATION

(11) **EP 3 738 482 A1**
(43) Date of publication of application: **18.11.2020**
(21) Application number: 20172891.2
(22) Date of filing: 05.05.2020
(51) Int. Cl.: A47J 31/38

(54) **LEVER-OPERATED DISPENSING UNIT FOR COFFEE MACHINES**

(30) Priority: 15.05.2019 IT 201900006878
(71) Applicant: Gruppo Cimbali S.p.A., 20082 Binasco (MI) (IT)
(72) Inventor: Volonté, Claudio, 20082 Binasco MI (IT); Marchesan, Michele, 20082 Binasco MI (IT)
(74) Representative: Perani & Partners S.p.A.

(57) **Abstract**

A dispenser unit (1) operated by a lever (12), for use in an espresso machine, comprising a housing (2), mainly extending along a vertical axis (A-A), between a lower base (3) and an upper cross member (4), a shaft (5) located within said housing (2) and freely translating along said vertical axis (A-A).

The dispensing unit comprises a rod-like lever (12) with one free end (13) and with the opposite end (14) operably connected to the upper end (6) of said shaft (5) located within the housing (2), with a cam (19, 20) and a cam follower (23, 24) mechanism interposed therebetween. The base (3) of the housing (2) has conventional coupling means which are adapted to receive and retain a portafilter (31) for a given dose of coffee grounds and the lever (12) is susceptible of angularly moving between a rest position (A) and a stall position (S) and vice versa. The dispensing unit includes a braking device mounted to a shaft (23), which extends along an axis (B-B) perpendicular to said vertical axis (A-A) along which said shaft (5), located within the housing (2), moves, which is able to exert a braking action only during the axial movement of said shaft (5) located within the housing (2) in the direction toward said upper cross member (4) of said housing (2) against the axial thrust provided by an elastic member (11), thereby reducing the angular back movement of said lever (12) from said stall position, (S) toward said rest position (A) when no dose of coffee grounds is placed in the portafilter or of the portafilter is not or wrongly positioned on the dispenser. Kinematic transmission means (25, 26, 27) are provided to connect said shaft (23) extending along the axis (B-B) with said shaft (5) located within the housing (2).

## Description

The present invention relates to a lever-operated dispensing unit for use in espresso machines, as well as an espresso machine comprising one or more lever-operated dispensing units.

Lever-operated units, also known as piston dispensers, are well known in the field of espresso machines as they promoted the birth and development of espresso coffee, whereby a machine with such dispenser is known by many operators in the field as the real Italian espresso machine.

The term lever-operated dispenser unit for an espresso machine, is intended to designate a device comprising a housing, mainly extending in a vertical direction, between a lower base and an upper cross member, with a shaft located within said housing and freely translating along said vertical extent. The shaft has an upper end and a lower end. A first opening is formed in said lower base of the housing and the lower end of the shaft extends through said opening below the base. A disk, acting as a piston, is attached to the lower end of said shaft perpendicular to the vertical axis thereof. A second opening formed in the upper cross member of said housing, is aligned with the upper end of said shaft that protrudes therefrom.

An elastic member, which is embodied by a helical spring, is fitted coaxial with the shaft between said disk carried by the lower end of the shaft and said upper cross member of the housing. A lever in the form of a rod, is operably connected, with one of its ends, to said upper end of said shaft with the interposition of a cam mechanism mounted to a pin whose axis is perpendicular to the vertical axis of the shaft.

Finally, the device is equipped with coupling means located at said first opening of the base of the housing and adapted to receive and retain a portafilter for a given dose of coffee grounds, as well as means adapted to actuate the hot water supply in the portafilter, when the latter is placed against the opening of the base.

Exemplary embodiments of lever-operated dispensers for espresso are disclosed in GB 1.005.838 and US 2017/0332828 A1.

In order to prepare coffee with the above discussed lever-operated dispenser, once the portafilter has been positioned, with the prescribed dose of coffee grounds, under the opening of the base of the housing, the operator will manually pull down the lever thereby imparting an angular displacement thereto relative to the housing.

By the aforementioned cam mechanisms, the lever will lift the shaft whose end has the disk attached thereto. The latter will compress the elastic member in the housing between the disk and the upper cross member of the housing.

The angular displacement of the lever is stopped by the cam mechanism when the compression of the elastic member reaches a predetermined value and the cam mechanism reaches a section of the profile that corresponds to a stall position for the lever.

Then by manually imparting a slight angular displacement to the lever toward the upper cross member of the housing, the operator will exit the stall position and start dispensing of the beverage.

This will occur by automatic actuation of the hot water supply means, which supply hot water toward the portafilter and by expansion of the elastic member which releases the energy accumulated during compression on the disk, which now acts as a piston.

As the beverage is being dispensed, the expansion of the elastic member also causes the lever to return to its initial or stand-by position.

When the dose of coffee grounds is in the portafilter and the hot water flows through the dose to form the beverage, i.e. during normal operation of the dispenser, the angular return movement of the lever occurs gradually and slowly without causing any danger to the operator, who is close to the machine.

It was found in practice that, particularly when several operators use the coffee machine, the lever may be displaced and the elastic member may be compressed, with no suitable dose of coffee grounds in the portafilter or with the portafilter not properly coupled under the opening of the base of the housing.

In this case, as the lever is moved away from its stall position, which will start beverage dispensing, the lever will be suddenly and quickly returned to its initial position, as its travel cannot be slowed down by the opposition of the hot water flow through the beverage forming dose upon the disk-piston.

This will potentially create a danger for the operator, who may be hit by the free end of the lever, as the latter abruptly return to its initial or stand-by position.

In view of the above, an object of the present invention is to provide a lever- or piston-operated dispensing unit for use in espresso machines that does not cause the aforementioned danger if no dose of coffee grounds is located in the portafilter or if the portafilter is inadequately positioned or is not placed at all on the dispenser.

A further object of the invention is to provide a lever- or piston-operated dispensing unit for use with an espresso machine that provides the operator with an auxiliary force, if required, in carrying out the elastic member loading operation by imparting a power-assisted angular displacement of the lever.

These and other objects, as better explained hereafter, are fulfilled by a lever-actuated dispenser unit for espresso machines as defined in the accompanying claim 1.

The invention will be now described in greater detail with reference to a preferred embodiment thereof, given by way of exemplary illustration and without limitation, and shown in the annexed drawings, in which:
- Figure 1 shows a schematic perspective view of the assembly of a lever-operated dispenser unit of the invention, with the lever in the stand-by position;
- Figure 2 shows a schematic perspective exploded view of the assembly of the parts of a conventional viscous fluid-operated braking device for slowing down the angular movement of the lever of the dispensing unit;
- Figure 3 shows a schematic side view of an espresso machine with a lever-operated dispenser unit showing the angular path covered by the lever as it moves from the stall position to the stand-by position and vice versa.

Referring to the aforementioned figures, the lever-operated dispenser unit is generally designated by numeral 1. It comprises a housing 2, mainly extending in a vertical direction (A-A), for example in the form of a cage, with a partially open lateral contour, extending between a lower base 3 and an upper cross member 4.

A shaft 5 with an upper end 6 and a lower end 7 is placed in said housing 2, and freely translates along said vertical extent (A-A). A first opening 8 is formed in said lower basement 3 of the housing 2. The lower end 7 of the shaft 5 extends through said opening 8 below the base 3 by penetrating a chamber 9.

A disk 10, which also acts as a piston, is attached to the lower end 7 of the shaft 5, perpendicular to the vertical axis of the shaft. The piston disk 10 is equipped with conventional sealing rings, not shown, which are adapted to cooperate with the inner cylindrical wall of the chamber 9, while the beverage is being dispensed.

A second opening, not shown in the drawings, is formed in the upper cross member 4 of said housing 2 and is aligned with the upper end 6 of the shaft 5 that projects out of it.

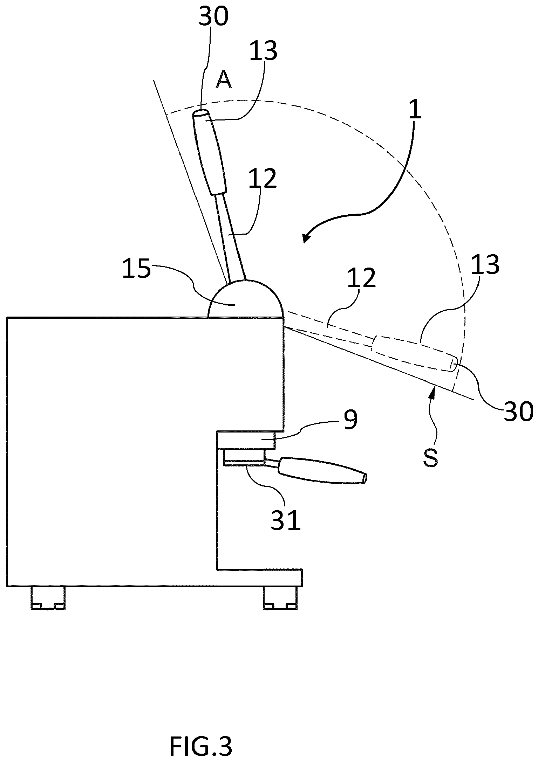

An elastic member, which is represented by a helical spring 11, is placed coaxial with the shaft 5, between said disk 10 carried by the lower end 7 of the shaft 5 and said upper cross member 4 of the housing 2. A lever in the form of a rod 12, with a free end 13 and an opposite fork-shaped end 14, is mounted to the housing 2 via a pin 15 and is adapted to be angularly displaced about the axis X-X, coinciding with said pin 15, between a first stand-by position "A" and a second stall position, "S", both shown in Figure 3, that will be further explained below.

Conventional cam means, referenced 19 and 20 are mounted to the same pin 15, and have their profiles slidingly engaged with respective cam followers, not shown because they are known in the art, which transversely engage the end 6 of the shaft 5.

Thus, the cams 19 and 20 and their cam followers, provide operable connection between the lever 12 and the upper end 6 of said shaft 5.

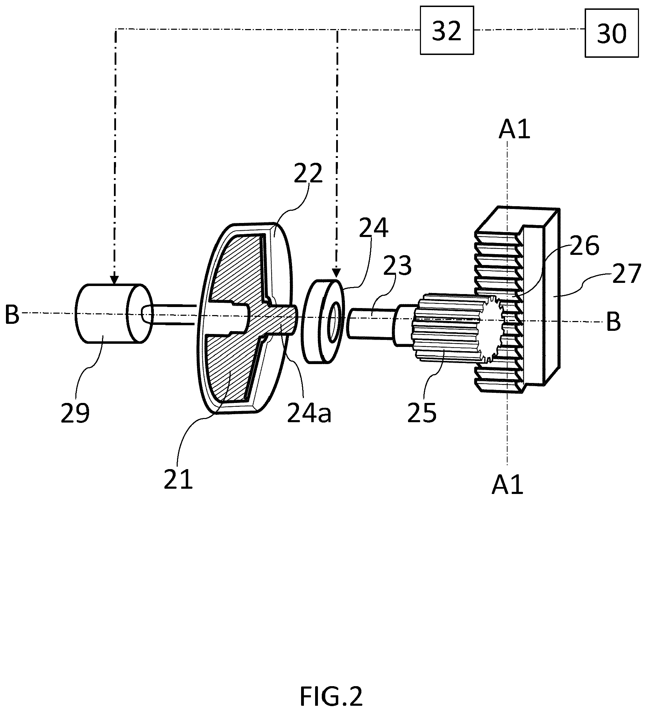

According to the invention, the rotor 21 of a conventional braking device with a housing 22 containing a viscous fluid, e.g. in the form of a gel, is keyed along an axis referenced B-B, here extending perpendicular to the axis X-X of the pin 15 and also perpendicular to the axis A-A, along which the shaft 5 is free to translate. This rotor 21, as schematically shown in Figure 2, is connected to a shaft 23 arranged along the axis B-B via connecting mode-selecting means 24 and 24a, with a pinion 25 also keyed thereto.

In particular and by way of example, the means 24 consist of a freewheel bearing which allows the rotor 21 of the braking device to only operate in one predetermined direction of rotation.

In the illustrated example, the pinion 25 is engaged with the front teeth 26 of a rack 27, which extends along an axis A1-A1 parallel to the axis A-A of the shaft 5 driven in one direction by the lever 12 and in the opposite direction, toward the cross member 4, by the expansion thrust of the elastic means 11.

Therefore, the rack 27 shall be deemed to be structurally movable with the shaft 5.

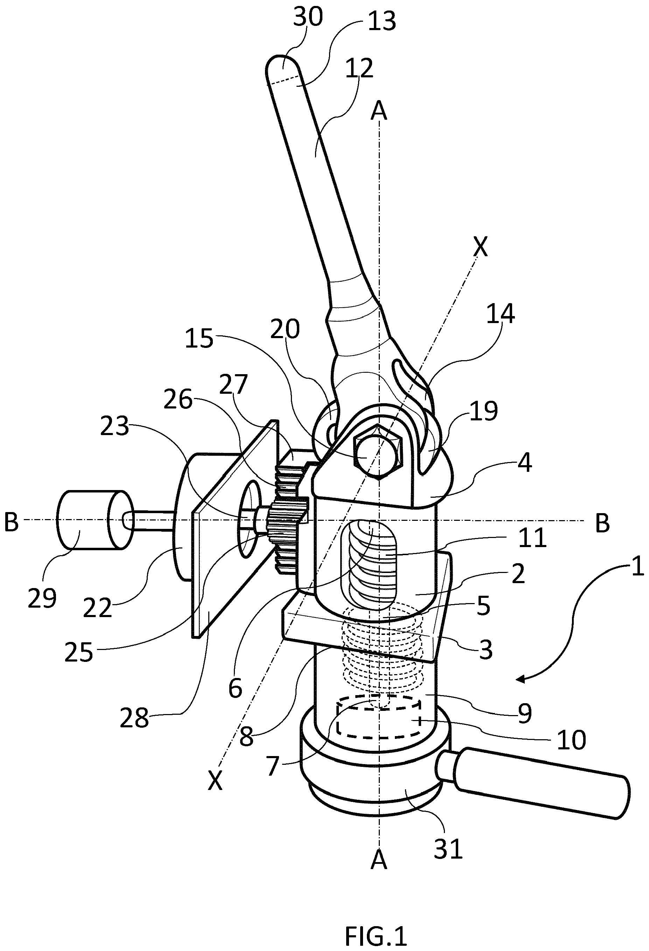

As schematically shown in Figure 1, the housing 22 of the braking device is mounted in a conventional manner to a wall 28 of the frame of the machine that is equipped with the dispensing unit 1.

In an alternative embodiment, the dispensing unit may be also equipped with an auxiliary electric motor, schematically referenced 29 in Figures 1 and 2.

The rotor of such auxiliary electric motor may be connected with the shaft 23, by means of the housing 22 of the braking device and selection means, referenced 30, which are carried, for instance, by the end 13 of the lever 12, and operate through an Electronic Control Unit (CPU) 32, which is also configured to operate in the management of the means 24 for coupling the rotor 21 with the housing 22 of the braking device.

Thus , in one embodiment of the invention, the CPU 32 allows the rotor of the auxiliary electric motor 29 and the pivot 15 of the lever 12 to be rotatably coupled in one angular displacement direction only, i.e. from the stand-by position A to stall position, S, using the pinion 25 and the rack 27 that are part of the braking device, which is only operable during the reverse angular displacement of the same lever 12, from the stall position S to the stand-by position A.

In order to prepare coffee using a lever unit of the invention, a portafilter 31 with a predetermined dose of coffee grounds therein, is placed below the dispensing chamber 9 using conventional coupling means to hold it in its proper position.

As is known in the art, the chamber 9 is in communication with a hot water source via a conduit that is shut off by a known and conventional controllable valve.

The hot water dispensing operation is set up by the operator by angularly displacing the lever 12 about the axis X-X, from its stand-by position A, as shown in Figure 3, to its stall position, S, as shown in the same figure. Such angular movement of the lever 12 causes, as mentioned above the shaft 5 to be lifted with its disk-piston 10, by means of the cams 19 and 20, as is known in the art.

This causes the helical spring 11 to be compressed against the cross member 4 of the housing 2. The spring remains in this compressed position as long as the lever 12 remains in its stall position S as determined by a particular section of the profiles of the cams 19 and 20.

When a beverage is to be prepared, a small thrust manually exerted on the lever 12 will cause it to exit the stall position S, thereby releasing the spring 11 from its compression state, and causing the disk 10 to fall down into the chamber 9 and press the hot water through the dose of coffee grounds in the underlying portafilter 31. The dispensed beverage is collected in an underlying cup, not shown on the drawings.

At the same time as the disk - piston 10 moves down, the lever 12 is angularly moved back to the stand-by position A at a slower speed, due to the opposition of the hot water flow that is forming the beverage within the chamber 9 against the disk 10.

With such kind of movement, the angularly moving free end 13 of the lever 12 does not cause dangerous situations for the operator.

Conversely, if the portafilter 31 has been placed in a wrong position or with no dose of coffee grounds therein, the displacement of the lever 12 from the stall position "S" for dispensing the beverage will cause a quick return thereof to the stand-by position "A", because no opposition force is exerted upon the disk-piston 10.

According to the invention, in these circumstances, the movement of the lever 12 is slowed down by the braking device whose rotor 21 moves in the viscous fluid within the housing 22.

That is, the rotor 21 that is keyed to the pinion 25, is rotated by the lifting movement of the shaft 5 and the rack 27 and its rotation is slowed down by the viscosity of the fluid within the housing 22, which acts against the rotor 21.

The safety of the operator is thus ensured even in this case of wrong placement of the unit.

According to a further embodiment of the invention, the CPU 32 may include a stress sensor, which senses the amount of force applied to the lever 12 for angular displacement thereof and provides a corresponding signal, a receiving unit for receiving the signal corresponding to the amount of stress that has been sensed, a processing and transmitting unit for processing and transmitting a control signal for controlling power supply to said motor in proportion to the amount of the stress signal that has been sensed.

## Claims

1. A dispenser unit (1) operated by a lever (12) for use in an espresso machine, comprising a housing (2) mainly extending along a vertical axis (A-A) between a lower base (3) and an upper cross member (4), a shaft (5) located within said housing (2) and freely translating along said vertical axis (A-A), said shaft (5) having an upper end (6) and a lower end (7), a first opening (8) formed in said lower base (3) of the housing (2), said lower end (7) of the shaft (5) extending through said opening (8) below the base (3), a disk (10) attached to the lower end (7) of said shaft (5) perpendicular to the vertical axis (A-A) thereof, a second opening formed in the upper cross member (4) of said housing (2), aligned with the upper end (6) of said shaft (5) which projects out of said second opening, an elastic member (11), reacting between said disk (10) carried by the lower end (7) of the shaft (5) and said upper cross member (4) of said housing (2), a rod-like lever (12), with one free end (13) and with the opposite end (14) operably connected to said upper end (6) of said shaft (5) with a cam (19, 20) and a cam follower mechanism interposed therebetween, said base (3) of the housing (2) being equipped with coupling means (8a) adapted to receive and hold a portafilter (31), said lever (12) being mounted so as to be able to be angularly displaced about a pivot (15) supported by said housing (2) with an axis (X-X) perpendicular to the vertical axis (A-A) of said shaft (5), and being susceptible to angularly move between a rest position and a stall position (S) and vice versa; a braking device carried by a shaft (23) arranged along an axis (B-B) perpendicular to said vertical axis (A-A) along which said shaft (5, placed within the housing (2), moves, said braking device performing a braking action only upon axial movement of said shaft (5) placed within the housing (2) in the direction that faces said upper cross member (4) of said housing (2) against the axial expansion thrust applied by said elastic member (11), thereby reducing the speed of the angular back movement of said lever (12) from said stall position (S) toward said rest position (A), kinematic transmission means (25, 26, 27) being provided to connect said shaft (23) extending along the axis (B-B) with said shaft (5) placed within the housing (2); **characterized in that** said braking device comprises a rotor (21) keyed to said shaft (23) extending along the axis (B-B), a housing (22) for a viscous material, in which said rotor is rotated in a predetermined angular direction in which said housing (22) of the braking device is conversely held stationary.

2. A dispenser unit as claimed in claim 1, **characterized in that** said kinematic means for connecting said shaft (23) extending along the axis (B-B) with said shaft (5) located within the housing (2), comprise a pinion (25), keyed to said drive shaft (23) extending along the axis (B-B), and engaged with the teeth (26) of a rack (27) that can be moved together with said shaft (5) placed within the housing (2) in the vertical direction defined by the axis (A-A) of said shaft (5) placed within the housing (2), connection means (24, 24a) being provided between said pinion (25) and said rotor (21) of the braking device, and being adapted to be selected for operation during displacement of said shaft (5) placed within the housing (2) in the direction that faces said upper cross member (4) of said housing (2) against the axial expansion thrust applied by said elastic member (11).

3. A dispenser unit as claimed in claim 2, **characterized in that** it includes an auxiliary electric motor (29) whose rotor is connected to said shaft (23) extending along the axis (B-B) of said rotor of the braking device, means (30, 32) being provided to select power supply to said electric motor (29) and cause it to operate when said shaft (23) extending along the axis (B-B) is free to rotate in the direction in which said pinion (25), its respective rack (27) and said shaft (5) located within the housing (2), allow angular displacement of said lever (12) from the rest position (A) to the stall position (S).

4. A dispenser unit as claimed in claim 3, **characterized in that** said means (30) for connecting and disconnecting power supply to said auxiliary motor (29) are placed on said lever (12).

5. A dispenser unit as claimed in claim 3 or 4, **characterized in that** said means (30) for connecting and disconnecting power supply to said auxiliary motor (29) comprise a stress sensor, which senses the amount of force applied to said lever (12) for angular displacement thereof and provides a corresponding signal, a receiving unit for receiving the signal corresponding to the amount of stress that has been sensed, a processing and transmitting unit (32) for processing and transmitting a control signal for controlling power supply to said motor in proportion to the amount of the stress signal that has been sensed.
